# EUROPÄISCHE PATENTSCHRIFT

(11) **EP 1 521 690 B1**
(45) Veröffentlichungstag und Bekanntmachung des Hinweises auf die Patenterteilung: **18.04.2007**
(21) Anmeldenummer: 03762385.7
(22) Anmeldetag: 17.02.2003
(51) Int. Cl.: B60R 21/01

(54) **VORRICHTUNG ZUM INSASSENSCHUTZ**
PASSENGER PROTECTION DEVICE
DISPOSITIF DE PROTECTION DES PASSAGERS

(30) Priorität: 06.07.2002 DE 10230485
(43) Veröffentlichungstag der Anmeldung: 13.04.2005
(73) Patentinhaber: ROBERT BOSCH GMBH, 70442 Stuttgart (DE)
(72) Erfinder: KOEHLER, Armin, 74343 Sachsenheim (DE); ROELLEKE, Michael, 71229 Leonberg-Hoefingen (DE)
(86) Internationale Anmeldenummer: PCT/DE2003/000467
(87) Internationale Veröffentlichungsnummer: WO 2004/005082

(56) Entgegenhaltungen:
- EP-A- 0 518 501
- WO-A-02/16170
- DE-A- 10 050 956
- US-A- 5 363 303

## Beschreibung

### Stand der Technik

Die Erfindung geht aus von einer Vorrichtung zum Insassenschutz nach der Gattung des unabhängigen Patentanspruchs.

Aus der gattungsgemäßen US-5,363,303 ist es bekannt, einen ersten Beschleunigungssensor zu testen und dann zur Berechnung des Auslösealgorithmus nur das Signal eines zweiten Sensors heranzuziehen. Darüber hinaus wird das Signal eines fehlerhaften Beschleunigungssensors nicht zur Berechnung im Auslösealgorithmus herangezogen.

### Vorteile der Erfindung

Die erfindungsgemäße Vorrichtung zum Insassenschutz mit den Merkmalen des unabhängigen Patentanspruchs hat den Vorteil, dass der Ausfall eines Sensors in jedem Stadium des Auslösealgorithmus berücksichtigt werden kann. Dies vermeidet, dass der Ausfall eines einzigen Sensors oder auch mehrerer Sensoren zum Gesamtausfall des Rückhaltesystems führt. Dafür wird erfindungsgemäß eine Rückfallstrategie, angepasst für jede Phase des Auslösealgorithmus, verwendet. Insbesondere durch die größere Komplexität, d.h. mehr Sensoren für die selbe Aufgabe bzw. Funktion bei heutigen Rückhaltesystemen ist es erfindungsgemäß möglich, dass bei Wegfall eines Sensors die Gesamtfunktionalität mit nur geringen Abstrichen bei der Performance erhalten bleibt. Dabei können unterschiedliche Lösungen für die unterschiedlichen Phasen des Algorithmuses verwendet werden.

Durch die in den abhängigen Ansprüchen aufgeführten Maßnahmen und Weiterbildungen sind vorteilhafte Verbesserungen der im unabhängigen Patentanspruch vorgeschlagenen Vorrichtung zum Insassenschutz möglich.

Besonders vorteilhaft ist, dass beim Ausfall eines Sensors beim Einschalten der Vorrichtung die Vorrichtung entweder wieder abgeschaltet wird, oder eine entsprechende Flagge in einem Speicher zur Beeinflussung der Schwellwertberechnung für den Auslösealgorithmus gesetzt wird. Damit wird gleich zu Anfang darauf eingegangen, dass beim Auslösealgorithmus dieser Ausfall berücksichtigt werden muss.

Weiterhin ist es vorteilhaft, dass beim Ausfall eines Sensors während der Schwellwertberechnung das Signal des ausgefallenen Sensors durch eine Konstante gehalten wird. Alternativ ist es möglich, die Empfindlichkeit des Auslösealgorithmuses zu verändern, beispielsweise durch das Absenken von Auslöseschwellen.

Schließlich ist es auch noch von Vorteil, dass der Prozessor beim Ausfall wenigstens eines Sensors vor der Bestimmung der Plausibilität dann diese notwendige Plausibilität mit einem weiteren Sensor alternativ bestimmt.

### Zeichnung

Ausführungsbeispiele der Erfindung sind in der Zeichnung dargestellt und werden in der nachfolgenden Beschreibung näher erläutert.

Es zeigen
- Figur 1: ein Blockschaltbild der erfindungsgemäßen Vorrichtung und
- Figur 2: ein Flussdiagramm des Verfahrens, das auf dem Prozessor abläuft.

### Beschreibung

Seit kurzem werden wieder am Markt vermehrt Rückhaltesysteme mit verteilten Sensoren zur frontalen Crasherkennung eingesetzt. Es werden dort Sensoren in der eigentlichen Crashzone verbaut, um sehr frühzeitig mehr Informationen über die Crashschwere zu erhalten. Die Seitencrashsensierung benötigt solche ausgelagerten Sensoren in der Crashzone oder in der Nähe davon, um überhaupt einen Seitenaufprall genügend schnell detektieren zu können. Bei größeren Fahrzeugen geht der Trend dahin, dass mehr als ein Sensor je Seite verbaut wird.

Erfindungsgemäß wird eine Vorrichtung zum Insassenschutz vorgeschlagen, die einen allgemeinen Ablauf zur Reaktion beim Ausfall von Sensoren aufweist. Entscheidend dabei ist der Zeitpunkt des Ausfalls des Sensors. Der Algorithmus zur Berechnung der Auslösung eines Rückhaltesystems weist unterschiedliche Phasen auf. In einer ersten Phase, dem sogenannten Reset-State, der Normaloperation, wird auf ein Crashereignis gewartet. In einer zweiten Phase der Schwellwertberechnung sind die Signale größer als bei normalen Fahrsituationen und der Auslösealgorithmus berechnet aus den Signalen die Auslösebedingungen. In der Auslöseentscheidungsphase wird ein Vergleich der Auslösebedingungen mit den Sensorsignalen durchgeführt. In der Plausibilitätsphase wird die Auslösebedingung durch Information eines weiteren Sensors plausibilisiert, um eine größere Sicherheit für die Auslösung eines Rückhaltesystems zu erreichen. Für jede Phase dieses Auslösealgorithmussees ergibt sich eine angepasste Strategie bezüglich des Ausfalls wenigstens eines Sensors. Die erfindungsgemäße Vorrichtung ist für Rückhaltesysteme allgemein gültig. Dadurch können für viele spezielle Systemkonfigurationen die selben Anforderungen gestellt werden. Dabei ist es wichtig, ob für das betrachtete Gebiet überhaupt ein Sensorausfallkonzept möglich ist. In früheren Systemen wurde diese Frage fast immer mit Nein beantwortet und somit wurden diese abgeschaltet. Wie oben dargestellt, weisen jedoch moderne Systeme eine größere Komplexität hinsichtlich der Mehrzahl an Sensoren für die selbe Aufgabe bzw. Funktion auf. Damit liegt eine gewisse Redundanz vor, die durch eine geeignete Ausfallstrategie ausgenutzt werden kann.

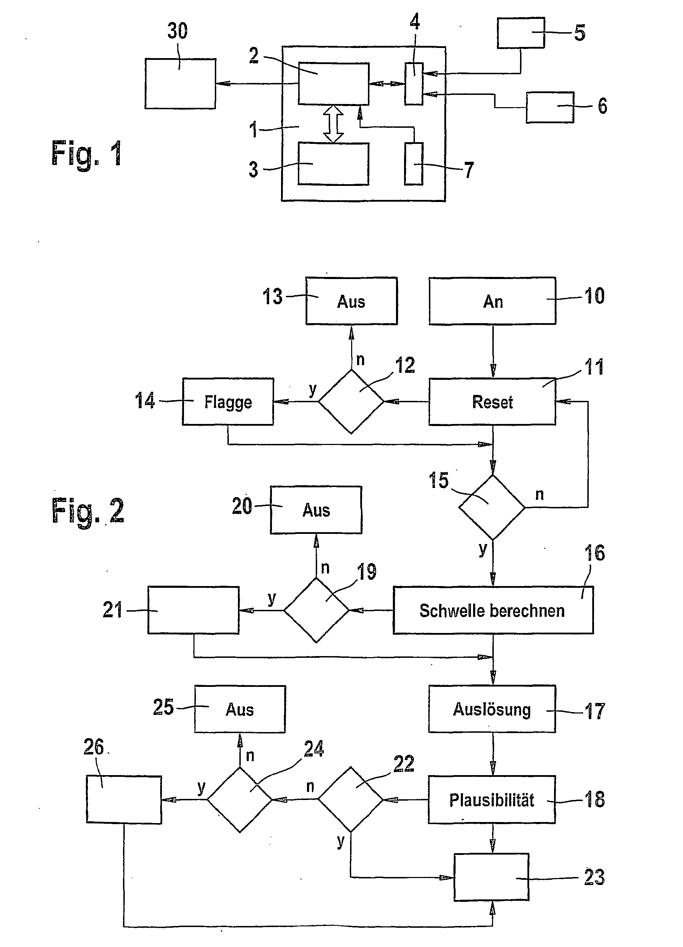

Figur 1 zeigt in einem Blockschaltbild die erfindungsgemäße Vorrichtung. Die erfindungsgemäße Vorrichtung weist ein Steuergerät 1 und ausgelagerte Sensoren 5 und 6 auf. Solche ausgelagerten Sensorsysteme können reine oder vorverarbeitete Sensorsignale, berechnete Algorithmusgrößen (Schwellen, Plausibilitäten) oder Auslöseentscheidungen senden.

Bei diesen Sensoren 5 und 6 handelt es sich beispielsweise um Beschleunigungssensoren, Drehratensensoren, Temperatur- oder Drucksensoren. Auch andere Verformungssensoren sind hier möglich. Die Sensoren 5 und 6 sind an einen Schnittstellenbaustein 4, angeschlossen, der sich im Steuergerät 1 befindet. Hier werden unidirektionale Verbindungen von den Sensoren 5 und 6 zum Schnittstellenbaustein 4 vorgeschlagen. Es ist jedoch alternativ möglich, eine bidirektionale Datenübertragung zwischen dem Schnittstellenbaustein 4 und den Sensoren 5 und 6 vorzusehen. Weiterhin ist es möglich, dass auch eine Bus-Verbindung zwischen dem Schnittstellenbaustein 4 und den Sensoren 5 und 6 vorgesehen ist. Es kann auch nur ein Sensor einen Schnittstellenbaustein 4 angeschlossen werden oder drei und mehr.

Der Schnittstellenbaustein 4 ist also hier als ein Empfängerbaustein ausgebildet, der die Signale von den Sensoren 5 und 6 empfängt und an einen Prozessor 2 im Steuergerät 1 weiter überträgt. Der Prozessor 2 kann als Mikrokontroller, als Mikroprozessor oder auch als Hardwarebaustein mit dezidierter Logik aufgebaut sein. Der Prozessor 2 wertet die Sensorsignale von den Sensoren 5 und 6 aus. Zusätzlich ist ein weiterer Sensor 7 im Steuergerät 1 mit dem Prozessor 2 verbunden. Dieser Sensor 7 dient beispielsweise als Plausibilitätssensor für eine Seitenaufprallsensierung. Der Sensor 7 ist vorzugsweise als Beschleunigungssensor oder als Drehratensensor ausgebildet. Es ist möglich, mehr als einen Sensor im Steuergerät 1 vorzusehen, insbesondere Sensoren, die eine winklige Empfindlichkeitsachse zueinander aufweisen. Der Prozessor 2 ist zur Sicherstellung seiner Funktion über einen Daten-Ein-/Ausgang mit einem Speicher 3 verbunden.

Figur 2 erläutert anhand eines Flussdiagramms die Funktion der erfindungsgemäßen Vorrichtung, die insbesondere auf dem Prozessor 2 abläuft. In Verfahrensschritt 10 wird die erfindungsgemäße Vorrichtung angeschaltet. Im folgenden Verfahrensschritt 11, der mit RESET bezeichnet ist, ist eine Normaloperation vorgesehen, in der auf ein Crashereignis gewartet wird. Wird in dieser Phase des Auslösealgorithmussees ein Ausfall eines Sensors erkannt, beispielsweise durch das Ausbleiben des Sensorsignals, dann wird zu Verfahrensschritt 12 weitergesprungen, indem überprüft wird, ob eine Rückfallposition vorliegt. Ist das nicht der Fall, dann wird zu Verfahrensschritt 13 übergegangen und die erfindungsgemäße Vorrichtung ausgeschaltet. Ist jedoch für den Ausfall zu diesem Zeitpunkt eine Rückfallbedingung vorgesehen, dann wird hier in Verfahrensschritt 14 beispielhaft eine Flagge gesetzt, dass ein jeweiliger Sensor ausgefallen ist. Dies kann dann bei der Berechnung der Auslösebedingung berücksichtigt werden.

Nach Verfahrensschritt 14 wird zurück zu Verfahrensschritt 15 gesprungen, der auch bei fehlendem Ausfall eines Sensors von Verfahrensschritt 11 erreicht wird. In Verfahrensschritt 15 wird der Auslösealgorithmus gestartet, sofern diese Startbedingungen erkannt wurden, beispielsweise durch das Überschreiten einer Rauschschwelle. Dabei werden die Sensorsignale berücksichtigt. Ist diese Rauschschwelle in Verfahrensschritt 15 nicht überschritten worden, wird zu Verfahrensschritt 11 zurückgesprungen. Wurde jedoch die Rauschschwelle überschritten und der Algorithmus wird gestartet, dann wird zu Verfahrensschritt 16 übergegangen, in dem die Auslösebedingungen für die Auslösung der Rückhaltemittel berechnet werden. Fällt in dieser Phase ein Sensor aus, wird zu Verfahrensschritt 19 gesprungen, indem überprüft wird, ob für diese Phase eine Rückfallstrategie vorliegt. Ist das nicht der Fall, dann wird in Verfahrensschritt 20 die erfindungsgemäße Vorrichtung abgeschaltet. Ist das jedoch der Fall, dann wird zu Verfahrensschritt 21 gesprungen, in dem die Rückfallstrategie für diese Phase des Auslösealgorithmussees verwendet wird. Eine Rückfallstrategie kann sein, dass das Signal des ausgefallenen Sensors durch eine Konstante gehalten wird. Eine alternative Strategie ist die Empfindlichkeit des Auslösealgorithmus beispielsweise durch Senken der Auslöseschwellen zu erhöhen. Nach Anwendung dieser Rückfallstrategie wird zu Verfahrensschritt 17 gesprungen, in dem die Auslöseentscheidung getroffen wird.

Wurde diese Auslöseentscheidung in Verfahrensschritt 17 getroffen, dann wird zu Verfahrensschritt 18 gesprungen, um die Plausibilität für diese Auslöseentscheidung festzustellen. Wurde jedoch vor der Berechnung der Plausibilität ein Sensorausfall festgestellt, und zwar insbesondere der, der zur Plausibilisierung notwendig ist, wird zu Verfahrensschritt 22 gesprungen. In Verfahrensschritt 22 wird überprüft, ob eine Plausibilitätsflagge im Speicher 3 durch den Prozessor 2 bereits gesetzt wurde. Ist das der Fall, dann ist der Ausfall des Sensors unerheblich, und es wird zu Verfahrensschritt 23 gesprungen, in dem die Rückhaltemittel 30 ausgelöst werden. Diese Auslösung kann adaptiv erfolgen. Wurde jedoch in Verfahrensschritt 22 erkannt, dass die Plausibilität noch nicht erfolgt ist, dann wird zu Verfahrensschritt 24 gesprungen, in dem überprüft wird, ob für die Phase der Plausibilisierung eine Rückfallstrategie vorliegt. Ist das nicht der Fall, dann wird in Verfahrensschritt 25 die erfindungsgemäße Vorrichtung abgeschaltet. Liegt jedoch eine Rückfallstrategie für die Plausibilisierung vor, dann wird in Verfahrensschritt 26 diese angewendet. Beispielhaft wird hier die Plausibilität durch ein Signal eines anderen Sensors durchgeführt. Dies ist dann möglich, wenn eine ausreichende Redundanz an Sensoren vorliegt. Dann wird zu Verfahrensschritt 23 gesprungen, wo die Rückhaltemittel 30 ausgelöst werden.

## Patentansprüche

1. Vorrichtung zum Insassenschutz, umfassend einen Prozessor (2) zur Berechnung eines Auslösealgorithmusses und wenigstens zwei Sensoren (5 bis 7) zur Erfassung eines Aufpralls, wobei die wenigstens zwei Sensoren (5 bis 7) mit dem Prozessor (2) verbunden sind wobei der Prozessor (2) derart konfiguriert ist, dass der Prozessor (2) in Abhängigkeit vom Aiusfallzeitpunkt des wenigstens einen Sensors den Auslösealgorithmus in seinem Ablauf derart beeinflusst, dass eine Rückfallstrategie, angepasst für jede Phase des Auslösealgorithmus, verwendet wird, wobei unterschiedliche Rückfallstrategien für die unterschiedlichen Phasen verwendet werden, **dadurch gekennzeichnet, dass** folgende Phasen unterschieden werden: eine Normaloperation, eine Berechnung von Auslösebedingungen und eine Plausibilitätsphase.

2. Vorrichtung nach Anspruch 1, **dadurch gekennzeichnet, dass** der Prozessor beim Ausfall wenigstens eines Sensors (5 bis 7) beim Einschalten der Vorrichtung die Vorrichtung wieder abschaltet

3. Vorrichtung nach Anspruch 1, **dadurch gekennzeichnet, dass** der Prozessor (2) beim Ausfall wenigstens eines Sensors (5 bis 7) beim Einschalten eine Flagge zur Beeinflussung der Schwellwertberechnung durch den Auslösealgorithmus in einem Speicher (3) setzt.

4. Vorrichtung nach Anspruch 1, 2 oder 3, **dadurch gekennzeichnet, dass** der Prozessor (2) beim Ausfall wenigstens eines Sensors (5 bis 7) während einer Schwellwertberechnung durch den Auslösealgorithmus das Signal des wenigstens einen ausgefallenen Sensors (5 bis 7) hält.

5. Vorrichtung nach Anspruch 1, 2 oder 3, **dadurch gekennzeichnet, dass** der Prozessor beim Ausfall wenigstens eines Sensors (5 bis 7) während der Schwellwertberechnung durch den Auslösealgorithmus die Empfindlichkeit des Auslösealgorithmus verändert.

6. Vorrichtung nach einem der Ansprüche 1 bis 5, **dadurch gekennzeichnet, dass** der Prozessor (2) bei einem Ausfall wenigstens eines Sensors vor einer Bestimmung der Plausibilität für eine Auslösebedingung die Plausibilität mit einem weiteren Sensor (5 bis 7) bestimmt.

## Claims

1. Vehicle occupant protection device, comprising a processor (2) for calculating a triggering algorithm and at least two sensors (5 to 7) for sensing an impact, the at least two sensors (5 to 7) being connected to the processor (2), wherein the processor (2) is configured in such a way that the processor (2) influences the triggering algorithm in its sequence, as a function of the failure time of the at least one sensor, in such a way that the fall back strategy is used, adapted to each phase of the triggering algorithm, different fall back strategies being used for the different phases, **characterized in that** the following phases are differentiated: a normal operation, a calculation of triggering conditions and a plausibility phase.

2. Device according to Claim 1, **characterized in that** when at least one sensor (5 to 7) fails during the switching on of the device, the processor switches off the device again.

3. Device according to Claim 1, **characterized in that** when at least one sensor (5 to 7) fails during the switching on process, the processor (2) sets a flag in a memory (3), in order to influence the threshold value calculation by means of the triggering algorithm.

4. Device according to Claim 1, 2 or 3, **characterized in that** when at least one sensor (5 to 7) fails during a threshold value calculation by means of the triggering algorithm, the processor (2) holds the signal of the at least one failed sensor (5 to 7).

5. Device according to Claim 1, 2 or 3, **characterized in that** when at least one sensor (5 to 7) fails during the threshold value calculation by means of the triggering algorithm, the processor changes the sensitivity of the triggering algorithm.

6. Device according to one of Claims 1 to 5, **characterized in that** when at least one sensor fails before the plausibility for a triggering condition has been determined, the processor (2) determines the plausibility with another sensor (5 to 7).

## Revendications

1. Dispositif de protection des passagers, comprenant un processeur (2) pour calculer un algorithme de déclenchement et au moins deux capteurs (5 à 7) pour saisir un choc, au moins deux capteurs (5 à 7) étant reliés au processeur (2), le processeur (2) étant configuré pour influencer l'algorithme de déclenchement en fonction du moment où l'au moins un capteur cesse de fonctionner, de telle sorte que l'on utilise une stratégie de retour adaptée à chaque phase de l'algorithme de déclenchement, différente pour chaque phase différente,
**caractérisé en ce qu'**
on différencie les phases suivantes : un fonctionnement normal, un calcul de conditions de déclenchement et une phase de plausibilité.

2. Dispositif selon la revendication 1,
**caractérisé en ce que**
si lors de l'activation du dispositif au moins un capteur (5 à 7) cesse de fonctionner, le processeur désactive de nouveau le dispositif.

3. Dispositif selon la revendication 1,
**caractérisé en ce que**
si lors de l'activation au moins un capteur (5 à 7) cesse de fonctionner, le processeur (2) place dans une mémoire (3) un indicateur pour influencer le calcul de valeur de seuil par l'algorithme de déclenchement.

4. Dispositif selon la revendication 1, 2 ou 3,
**caractérisé en ce que**
si au moins un capteur (5 à 7) cesse de fonctionner pendant un calcul de valeur de seuil par l'algorithme de déclenchement, le processeur (2) maintient le signal du au moins un capteur (5 à 7) ayant cessé de fonctionner.

5. Dispositif selon la revendication 1, 2 ou 3,
**caractérisé en ce que**
si au moins un capteur (5 à 7) cesse de fonctionner pendant le calcul de valeur de seuil par l'algorithme de déclenchement, le processeur, modifie la sensibilité de l'algorithme de déclenchement.

6. Dispositif selon l'une des revendications 1 à 5,
**caractérisé en ce que**
si au moins un capteur cesse de fonctionner avant une détermination de la plausibilité pour une condition de déclenchement, le processeur (2), détermine la plausibilité à l'aide d'un autre capteur (5 à 7).
